# EUROPEAN PATENT APPLICATION

(11) **EP 4 769 766 A1**
(43) Date of publication of application: **01.07.2026**
(21) Application number: 25837755.5
(22) Date of filing: 09.07.2025
(51) Int. Cl.: H01M 50/375, H01M 50/183, H01M 50/178

(54) **ELECTRODE LEAD ASSEMBLY, METHOD FOR MANUFACTURING ELECTRODE LEAD ASSEMBLY, SECONDARY BATTERY, AND METHOD FOR MANUFACTURING SECONDARY BATTERY**

(30) Priority: 10.07.2024 KR 20240091268; 07.07.2025 KR 20250091129
(71) Applicant: LG ENERGY SOLUTION, LTD., Seoul 07335 (KR)
(72) Inventor: PARK, Eun Suk, Daejeon 34122 (KR); LEE, Yu Jin, Daejeon 34122 (KR); JU, Hye Yeong, Daejeon 34122 (KR); YU, Hyung Kyun, Daejeon 34122 (KR)
(74) Representative: Plasseraud IP
(86) International application number: PCT/KR2025/009976
(87) International publication number: WO 2026/014926

(57) **Abstract**

The present disclosure relates to an electrode lead assembly, a method for manufacturing an electrode lead assembly, a secondary battery, and a method for manufacturing a secondary battery, and more specifically, to a secondary battery in which a foam member having heat-induced foaming properties is provided in a fluid flow path, and a method for manufacturing such a secondary battery. An electrode lead assembly according to an embodiment of the present disclosure may include an electrode lead; a lead film made of an insulating material and bonded to a portion of the electrode lead; and a foam member having heat-induced foaming properties, wherein a fluid flow path through which a fluid flows may be formed between the electrode lead and the lead film, and the foam member may be provided in the fluid flow path.

## Description

### TECHNICAL FIELD

### CROSS-REFERENCE TO RELATED APPLICATIONS

The present application is based on and claims priority from Korean Patent Application No. 10-2024-0091268, filed on July 10, 2024 and Korean Patent Application No. 10-2025-0091129, filed on July 7, 2025, with the Korean Intellectual Property Office, the disclosure of which is incorporated herein in its entirety by reference.

### TECHNICAL FIELD

The present disclosure relates to an electrode lead assembly, a method for manufacturing an electrode lead assembly, a secondary battery, and a method for manufacturing a secondary battery, and more specifically, to an electrode lead assembly in which a foam member having heat-induced foaming properties is provided in a fluid flow path, a method for manufacturing such an electrode lead assembly, a secondary battery, and a method for manufacturing such a secondary battery.

### BACKGROUND ART

Recently, the depletion of fossil fuels forces to increase the price of energy sources and has strong impact on the growing attention towards environmental pollution, and the need for eco-friendly alternative energy sources is an essential factor for future life. In this context, a variety of energy generation technologies including solar energy, wind energy, tidal energy and the like are being studied, and attention is directed to energy storage systems such as batteries to make use of the produced electrical energy more efficiently.

Moreover, as the technology development and demand for electronic mobile devices and electric vehicles using batteries increase, the demand for batteries as an energy source is rapidly increasing, and accordingly, many studies are being conducted on batteries that meet a variety of needs.

Batteries that store electrical energy may be generally divided into primary batteries and secondary batteries. Primary batteries are disposable consumable batteries, whereas secondary batteries are rechargeable batteries manufactured using materials in which the oxidation and reduction processes between current and substances are repeatable. That is, when a reduction reaction is performed on a material by current, the power is charged, and when an oxidation reaction is performed on a material, the power is discharged, and electricity is generated while such charging and discharging are repeatedly performed.

Secondary batteries may be classified into cylindrical cells, pouch cells, prismatic cells, and the like according to their shapes. Among them, pouch cells may be manufactured in a form where an electrode assembly in which a positive electrode, a negative electrode, and a separator are laminated is accommodated inside the pouch, and the outer part of the pouch is sealed.

Meanwhile, an electrolyte may be accommodated together with the electrode assembly inside the pouch of the pouch cell. At this time, residual moisture of the electrolyte or moisture infiltrated from the outside may react with the lithium salt inside the pouch of the pouch cell to generate hydrogen fluoride (HF), and gases such as carbon dioxide, carbon monoxide, ethylene, and methane may be generated due to decomposition of the electrolyte. Additionally, depending on the material of the positive electrode included in the electrode assembly of the pouch cell, hydrogen and HF may be additionally generated, which may cause overheating due to overcharge and internal short circuit during the charging and discharging process. Accordingly, a large amount of gas may be generated inside the pouch. The pressure inside the pouch may increase due to such gas, and the increased pressure may cause a swelling phenomenon in which the pouch swells or a rupture phenomenon in which a portion of the pouch bursts. Therefore, the pouch cell needs a structure that may efficiently discharge gas inside the pouch to prevent the pouch from rupturing due to internal pressure.

### DISCLOSURE

### TECHNICAL PROBLEM

The present disclosure is directed to providing an electrode lead assembly having a structure capable of efficiently discharging gas inside a pouch to the outside, a method for manufacturing such an electrode lead assembly, a secondary battery, and a method for manufacturing such a secondary battery.

### TECHNICAL SOLUTION

An electrode lead assembly according to the present disclosure may include an electrode lead; a lead film made of an insulating material and bonded to a portion of the electrode lead; and a foam member having heat-induced foaming properties, wherein a fluid flow path through which a fluid flows may be formed between the electrode lead and the lead film, and the foam member may be provided in the fluid flow path.

The fluid flow path may include a first fluid flow path extending along the length direction of the electrode lead from one end of the lead film; and a second fluid flow path connected to the first fluid flow path and extending along the width direction of the electrode lead.

The foam member may be provided in the first fluid flow path.

The foam member may foam at a temperature of 150°C or higher.

The foam member may have a sheet shape and may be attached to one surface of the electrode lead.

The foam member may include a shell made of a polymer material and expanding upon heating; and a foam material enclosed within the shell and foaming upon heating.

The electrode lead assembly may further include a coating layer that coats the foam member on the electrode lead.

The electrode lead assembly may further include a pad-shaped member whose one surface is bonded to the electrode lead.

The fluid flow path may be formed between the pad-shaped member and the lead film.

A method for manufacturing an electrode lead assembly according to the present disclosure may include a foam member arrangement step of arranging a foam member having heat-induced foaming properties on one side of an electrode lead; and a film attachment step of attaching a lead film made of an insulating material to the electrode lead where the foam member is disposed, wherein in the film attachment step, the lead film may be attached to only a portion of the electrode lead, and a fluid flow path through which a fluid flows may be formed between the lead film and the electrode lead.

In the film attachment step, the foam member may be brought into close contact with the electrode lead by the lead film.

In the film attachment step, the lead film may be attached to the electrode lead so that one end of the lead film is disposed parallel to one end of the foam member.

In the foam member arrangement step, the foam member may be attached to one surface of the electrode lead.

In the foam member arrangement step, the foam member may be coated on one surface of the electrode lead.

The method for manufacturing an electrode lead assembly may further include a pad arrangement step of being performed prior to the foam member arrangement step and arranging a pad-shaped member on one surface of the electrode lead.

In the foam member arrangement step, the foam member may be disposed on one surface of the pad-shaped member.

In the film attachment step, the foam member may be brought into close contact with the pad-shaped member by the lead film.

A secondary battery according to the present disclosure may include an electrode assembly including a negative electrode, a positive electrode, and a separator; an exterior material accommodating the electrode assembly; an electrode lead electrically connected to the electrode assembly and protruding to the outside of the exterior material; and a lead film bonded to a portion of the electrode lead to insulate the electrode lead from the exterior material, wherein a fluid flow path through which gas generated during charging and discharging of the electrode assembly flows may be formed between the electrode lead and the lead film, and wherein a foam member having heat-induced foaming properties may be provided in the fluid flow path.

The foam member may be disposed adjacent to the internal space of the exterior material accommodating the electrode assembly in the fluid flow path.

The fluid flow path may include a first fluid flow path adjacent to the internal space of the exterior material and extending along the length direction of the electrode lead; and a second fluid flow path connected to the first fluid flow path and extending along the width direction of the electrode lead.

The foam member may be provided in the first fluid flow path.

A method for manufacturing a secondary battery according to the present disclosure may include a foam member arrangement step of arranging a foam member having heat-induced foaming properties on one side of an electrode lead; a film attachment step of attaching a lead film made of an insulating material to the electrode lead where the foam member is disposed; a connection step of electrically connecting the electrode lead to an electrode assembly that is disposed inside an exterior material and includes a negative electrode, a positive electrode, and a separator; and a sealing step of sealing the inside of the exterior material by bonding the exterior material and the lead film, wherein in the film attachment step, the lead film may be attached to only a portion of the electrode lead, and a fluid flow path through which gas generated during charging and discharging of the electrode assembly flows may be formed between the lead film and the electrode lead.

The sealing step may include a step of applying heat and pressure to the exterior material and the lead film, and at least a portion of the foam member may foam due to the heat applied in the sealing step.

### ADVANTAGEOUS EFFECTS

According to an electrode lead assembly according to an embodiment of the present disclosure, a fluid flow path is formed between an electrode lead and a lead film, and a foam member having heat-induced foaming properties may be provided in the fluid flow path. Such an electrode lead assembly is a component of a battery cell and may be electrically connected to an electrode assembly. Heat is generated during charging and discharging of the battery cell, and the foam member may foam between the electrode lead and the lead film. In this case, the fluid flow path expands, so that the internal gas of the battery cell may be smoothly discharged, thereby delaying or preventing damage to the exterior material of the battery cell due to an increase in internal pressure.

Meanwhile, the effects according to the present disclosure are not limited by the contents exemplified above, and more various effects are included in this specification.

### DESCRIPTION OF DRAWINGS

FIG. 1 is a cross-sectional view of an electrode lead assembly according to an embodiment of the present disclosure.
FIG. 2 is a view for describing the shape of a fluid flow path in the electrode lead assembly of FIG. 1.
FIG. 3 is a view for describing a state in which a foam member is disposed only in a portion of the fluid flow path in the electrode lead assembly of FIG. 1.
FIG. 4 is a cross-sectional view for describing the structure of the foam member provided in the electrode lead assembly of FIG. 1.
FIG. 5 is a cross-sectional view illustrating that a pad-shaped member is additionally provided in the electrode lead assembly of FIG. 1.
FIG. 6 is a cross-sectional view illustrating that a coating layer is formed on the electrode lead assembly of FIG. 1.
FIG. 7 is a cross-sectional view of an electrode lead assembly according to another embodiment of the present disclosure.
FIG. 8 is a flowchart of a method for manufacturing an electrode lead assembly according to the present disclosure.
FIG. 9 is a perspective view schematically illustrating a secondary battery according to the present disclosure.
FIG. 10 is a cross-sectional view schematically illustrating a portion of a cross-section taken along line A-A' of FIG. 1.
FIG. 11 is a plan view schematically illustrating a portion of a secondary battery according to the present disclosure.
FIG. 12 is a plan view schematically illustrating a state in which a foam member is disposed only in a portion of the fluid flow path in a secondary battery according to the present disclosure.
FIG. 13 is a flowchart of a method for manufacturing a secondary battery according to the present disclosure.

### BEST MODE

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, an electrode lead assembly, a method for manufacturing an electrode lead assembly, a secondary battery, and a method for manufacturing a secondary battery according to the present disclosure will be described with reference to the drawings.

### Electrode lead assembly

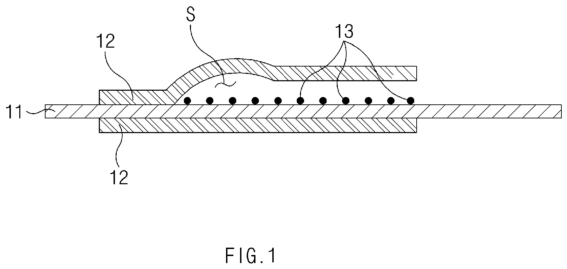

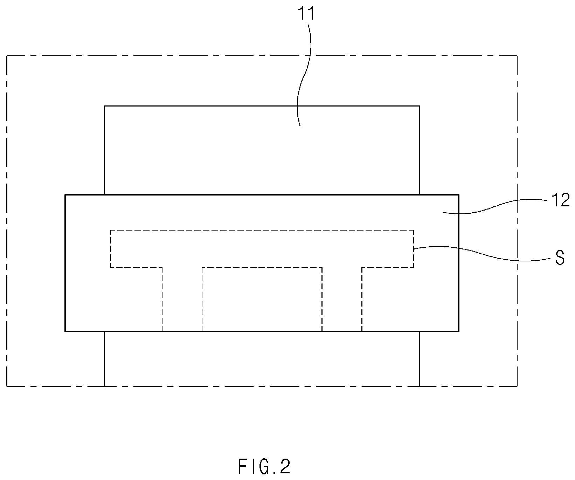

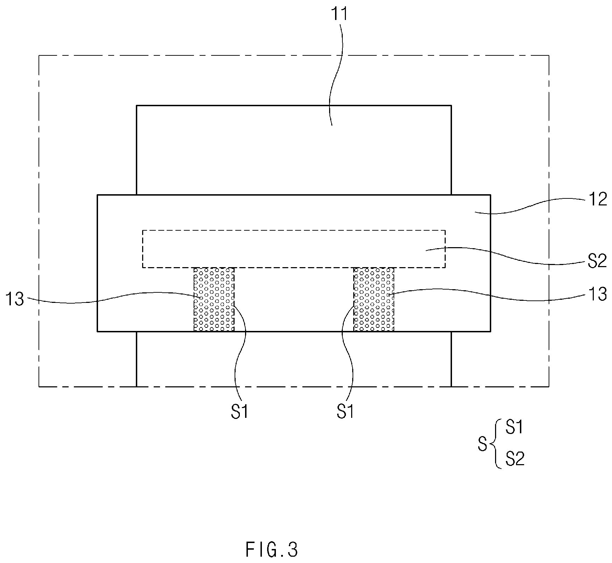

FIG. 1 is a cross-sectional view of an electrode lead assembly according to an embodiment of the present disclosure. FIG. 2 is a view for describing the shape of a fluid flow path in the electrode lead assembly of FIG. 1. FIG. 3 is a view for describing a state in which a foam member is disposed only in a portion of the fluid flow path in the electrode lead assembly of FIG. 1.

Referring to FIGS. 1 to 3, an electrode lead assembly 10 according to an embodiment of the present disclosure may include an electrode lead 11, a lead film 12 made of an insulating material and bonded to a portion of the electrode lead 11, and a foam member 13 having heat-induced foaming properties. A fluid flow path S through which a fluid flows may be formed between the electrode lead 11 and the lead film 12, and the foam member 13 may be provided in the fluid flow path S.

This electrode lead assembly 10 is a component of a secondary battery and may be electrically connected to an electrode assembly constituting the secondary battery. Heat is generated during charging and discharging of the secondary battery, and the foam member 13 that receives the heat may foam between the electrode lead 11 and the lead film 12. In this case, the fluid flow path S expands due to pressure, so that the internal gas of the secondary battery may be smoothly discharged through the expanded fluid flow path S. This may delay or prevent damage to the exterior material of the secondary battery due to an increase in the internal pressure of the secondary battery.

The electrode lead 11 is electrically connected to the electrode assembly of the secondary battery, and may partially protrude to the outside of the exterior material of the secondary battery. The secondary battery may provide electrical energy to the outside by the electrode lead protruding to the outside of the exterior material. That is, the electrode lead 11 may be a conductive terminal.

The lead film 12 may be a sheet that covers the electrode lead 11 to insulate the exterior material of the secondary battery and the electrode lead 11 from each other. This lead film 12 may be disposed on both surfaces of the electrode lead 11 to cover the electrode lead 11. The lead films 12 are configured in a pair, and may each cover both surfaces of the electrode lead 11.

This lead film 12 may be made of an insulating material. In particular, the lead film 12 may be made of a semi-permeable material that does not allow the electrolyte of the secondary battery to pass through but allows gas generated inside the secondary battery to pass through. For example, the lead film 12 may be a semi-permeable membrane made of a resin-based material such as PP, PET, or PE.

Meanwhile, the secondary battery to which the electrode lead assembly 10 is coupled may generate gas as it is repeatedly charged and discharged, and thus the pressure inside the exterior material may increase. If the pressure inside the exterior material increases excessively, damage to the exterior material may occur, thereby causing the secondary battery to lose its function.

The electrode lead assembly 10 according to an embodiment of the present disclosure may be coupled to a secondary battery and have a structure that easily discharges the pressure generated internally during charging and discharging of the secondary battery through a fluid flow path S. Therefore, according to the electrode lead assembly 10 according to an embodiment of the present disclosure, it is possible to prevent the internal pressure of the secondary battery from increasing excessively.

Meanwhile, the fluid flow path S may be a portion where the electrode lead 11 and the lead film 12 are not bonded to each other. Specifically, when the lead film 12 is bonded to the electrode lead 11, it may be bonded to only a portion of the electrode lead 11. That is, the area where the lead film 12 and the electrode lead 11 are not bonded may become a fluid flow path S through which a fluid may flow.

This fluid flow path S may include a first fluid flow path S1 extending along the length direction of the electrode lead 11 from one end of the lead film 12, and a second fluid flow path S2 connected to the first fluid flow path S1 and extending along the width direction of the electrode lead 11. That is, the fluid flow path S may have a roughly "T" or " 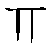 " shape. At this time, one end of the first fluid flow path S1 may be in contact with one end of the lead film 12, and the other end of the first fluid flow path S1 may be in contact with the second fluid flow path S2.

Meanwhile, the foam member 13 may be disposed at various positions on the fluid flow path S. For example, the foam members 13 may be disposed at equal intervals from one end of the fluid flow path S to the other end.

Additionally, the foam member 13 may be disposed on the first fluid flow path S1. One end of the first fluid flow path S1 may be in contact with one end of the lead film 12, and one end of the lead film 12 may be in contact with the internal space of the secondary battery. In this case, during charging and discharging of the secondary battery, the foam member 13 may foam in an area adjacent to the internal space of the secondary battery. Therefore, the internal gas of the secondary battery easily flows into the expanded fluid flow path S according to the foaming of the foam member 13, so that the internal gas of the secondary battery may be efficiently discharged.

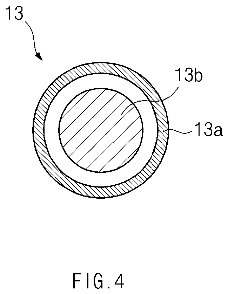

FIG. 4 is a cross-sectional view for describing the structure of the foam member provided in the electrode lead assembly of FIG. 1.

Referring to FIG. 4, the foam member 13 may include a shell 13 made of a polymer material and expanding upon heating, and a foam material 13b enclosed within the shell 13a and foaming upon heating. The shell 13a is a material that expands by receiving heat, and various types of polymer materials may be used for this material. Additionally, the foam material 13b is a material that foams by receiving heat, and a foaming agent that foams at a temperature of 150°C or higher may be used for this material.

Meanwhile, the foam member 13 having a spherical shape may be coupled to the electrode lead 11 in various ways. For example, the foam member 13 may be attached to the electrode lead 11 by an adhesive, and an adhesive layer formed by curing the adhesive may be formed between the foam member 13 and the electrode lead 11.

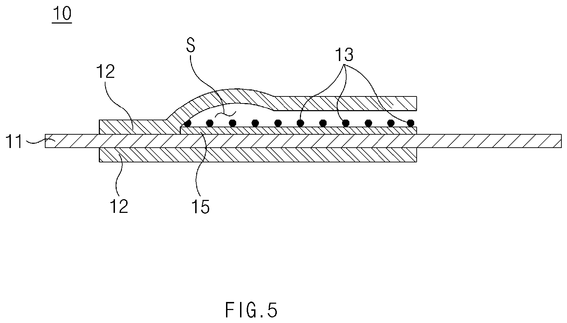

FIG. 5 is a cross-sectional view illustrating that a pad-shaped member is additionally provided in the electrode lead assembly of FIG. 1.

Referring to FIG. 5, the electrode lead assembly 10 according to an embodiment of the present disclosure may further include a pad-shaped member 15 whose one surface is bonded to the electrode lead 11. At this time, the fluid flow path S may be formed between the pad-shaped member 15 and the lead film 11.

Specifically, the above-described fluid flow path S may be provided on the upper side of the pad-shaped member 15, and the foam member 13 that foams due to heat may be provided in at least a portion of the fluid flow path S. When the foam member 13 foams, the fluid flow path S formed between the pad-shaped member 15 and the lead film 11 may expand.

Meanwhile, when the pad-shaped member 15 is viewed from above, the pad-shaped member 15 may have a roughly "T" or " 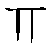 " shape. However, this is merely one example, and the pad-shaped member may have various shapes.

Additionally, the fluid flow path S formed on the upper side of the pad-shaped member 15 may have the same shape as the geometry of the pad-shaped member 15. For example, when the pad-shaped member 15 has a "T" or " 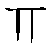 " shape, the fluid flow path S may also have a "T" or " 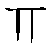 " shape. Additionally, one end of the pad-shaped member 15 may be in contact with one end of the lead film 12.

The foam member 13 is provided in the fluid flow path S provided on the upper side of the pad-shaped member 15, and the foam member 13 may be provided in various areas on the upper side of the pad-shaped member 15. For example, the foam member 13 may be provided on the entire upper area of the pad-shaped member 15 having a "T" or " 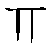 " shape. Additionally, the foam member 13 may be provided on only a portion of the pad-shaped member 15.

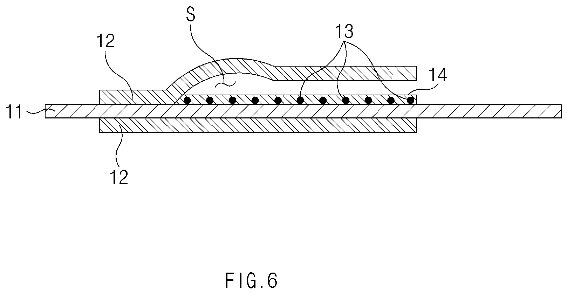

FIG. 6 is a cross-sectional view illustrating that a coating layer is formed on the electrode lead assembly of FIG. 1.

Referring to FIG. 6, the electrode lead assembly 10 according to an embodiment of the present disclosure may include a coating layer 14 that coats the foam member 13 on the electrode lead 11. This coating layer 14 may be formed in various ways. For example, the coating layer 14 may be formed by curing a liquid resin, and a plurality of foam members 13 may be coated on one surface of the electrode lead 11.

The electrode lead assembly 10 according to an embodiment of the present disclosure includes the coating layer 14 as described above, and thus even when an impact is applied to the electrode lead assembly 10, or the electrode lead assembly 10 moves, the foam member 13 may be fixed to a predetermined position of the fluid flow path S.

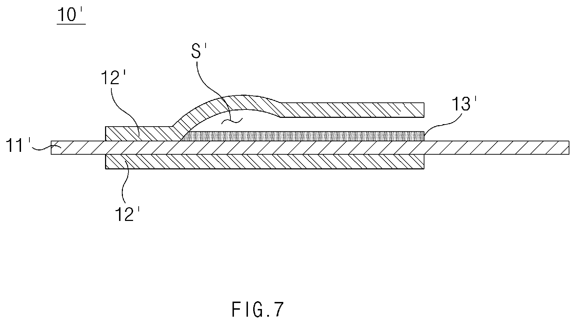

FIG. 7 is a cross-sectional view of an electrode lead assembly according to another embodiment of the present disclosure.

Referring to FIG. 7, in an electrode lead assembly 10' according to another embodiment of the present disclosure, a foam member 13' may have a sheet shape and may be attached to one surface of the electrode lead 11'.

The electrode lead assembly 10' according to another embodiment of the present disclosure may include an electrode lead 11', a lead film 12', and a foam member 13'. A fluid flow path S' may be formed between the electrode lead 11' and the lead film 12', and the foam member 13' may be provided in the fluid flow path S'.

The foam member 13' has a sheet shape, and may be attached to one surface of the electrode lead 11'. Specifically, the foam member 13' may include a sheet-shaped shell with an empty space therein and a foam material accommodated in the empty space inside the shell. The shell is a material that expands by receiving heat, and various types of polymer materials may be used for this material. Additionally, the foam material is a material that foams by receiving heat, and a foaming agent that foams at a temperature of 150°C or higher may be used for this material. Additionally, an adhesive layer may be formed between the shell and the electrode lead 11'.

Meanwhile, this sheet-shaped foam member 13' may have various thicknesses. For example, the sheet-shaped foam member 13' may have a thickness of 40 µm to 60 µm. In particular, the sheet-shaped foam member 13' may have a thickness of 50 µm. When the sheet-shaped foam member 13' has a thickness of 50 µm, it has an appropriate explosive force, which may allow the fluid flow path S' to expand without damaging the electrode lead 11' and the lead film 12'.

### Method for manufacturing electrode lead assembly

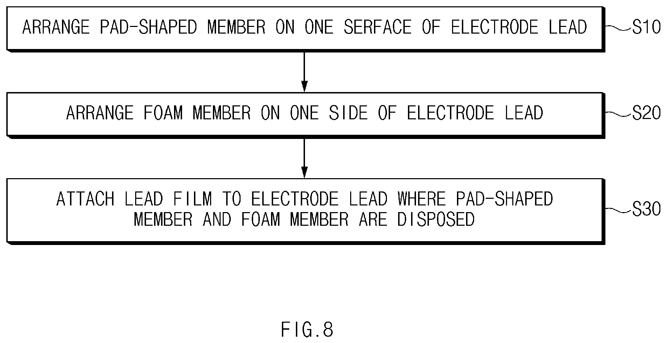

FIG. 8 is a flowchart of a method for manufacturing an electrode lead assembly according to the present disclosure.

Referring to FIG. 8, a method for manufacturing an electrode lead assembly according to the present disclosure may include a foam member arrangement step S20 of arranging a foam member 13 having heat-induced foaming properties on one side of the electrode lead 11; and a film attachment step S30 of attaching a lead film 12 made of an insulating material to the electrode lead 11 on which the foam member 13 is disposed. In the film attachment step S30, the lead film 12 may be attached only to a portion of the electrode lead 11, and a fluid flow path S through which a fluid flows may be formed between the lead film 12 and the electrode lead 11.

The electrode lead assembly 10 manufactured by a method for manufacturing an electrode lead assembly according to the present disclosure has a fluid flow path S through which a fluid flows between the electrode lead 11 and the lead film 12, and the foam member 13 having heat-induced foaming properties may be provided in the fluid flow path S. This electrode lead assembly 10 is a component of a secondary battery and may be electrically connected to an electrode assembly constituting the secondary battery. Heat is generated during charging and discharging of the secondary battery, and the foam member 13 that receives the heat may foam between the electrode lead 11 and the lead film 12. In this case, the fluid flow path S expands due to pressure, so that the internal gas of the secondary battery may be smoothly discharged through the expanded fluid flow path S. This may delay or prevent damage to the exterior material of the secondary battery due to an increase in the internal pressure of the secondary battery.

The foam member arrangement step S20 is a step of arranging a foam member 13 having heat-induced foaming properties on one side of the electrode lead 11, and may be a step of arranging the foam member 13 on the upper surface of the electrode lead 11. The foam member 13 disposed on the upper surface of the electrode lead 11 may be brought into close contact with the upper surface of the electrode lead 11 by the film attachment step S30.

In the foam member arrangement step S20, the foam member 13 may be attached to one surface of the electrode lead 11. The attachment of the foam member 13 and the electrode lead 11 may be performed in various ways. For example, the foam member arrangement step S30 may be a step of forming an adhesive layer on one surface of the electrode lead 11 and then arranging the foam member 13 on the corresponding adhesive layer.

Additionally, in the foam member arrangement step S20, the foam member 13 may be coated on one surface of the electrode lead 11. Various methods may be used for coating the foam member 13. For example, a coating layer 14 formed by curing a liquid resin is formed on the fluid flow path S, and this coating layer 14 may coat a plurality of foam members 13 on one surface of the electrode lead 11.

The film attachment step S30 is a step of attaching the lead film 12 made of an insulating material to the electrode lead 11, and the lead film 12 may be attached to cover at least a portion of the electrode lead 11. The lead film 12 is a film that prevents the electrode lead 11 from directly contacting the exterior material of the secondary battery, and may be an insulating tape having an adhesive surface. At this time, the adhesive surface of the lead film 12 may be bonded to the electrode lead 11.

The method for manufacturing an electrode lead assembly according to the present disclosure may further include a pad arrangement step S10 of being performed prior to the foam member arrangement step S20 and arranging a pad-shaped member 15 on one surface of the electrode lead 11. At this time, in the foam member arrangement step S20, the foam member 13 may be disposed on one surface of the pad-shaped member 15. Additionally, in the film attachment step S30, the foam member 13 may be brought into close contact with the pad-shaped member 15 by the lead film 12.

Meanwhile, in the method for manufacturing an electrode lead assembly according to the present disclosure, the foam member provided between the electrode lead and the lead film may be the sheet-shaped foam member 13' illustrated in FIG. 7. In this case, in the film attachment step S30, the lead film 12' may be attached to the electrode lead 11' so that one end of the lead film 12' is disposed parallel to one end of the sheet-shaped foam member 13'.

### Secondary battery

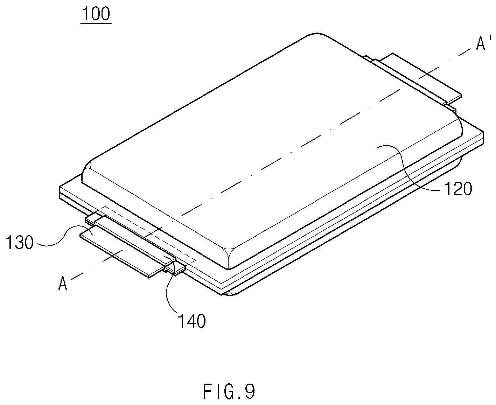

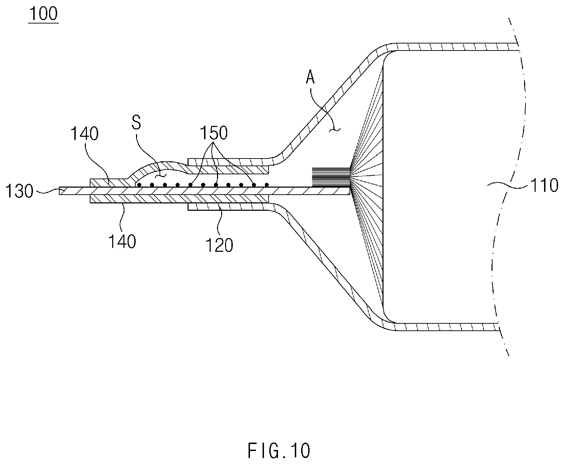

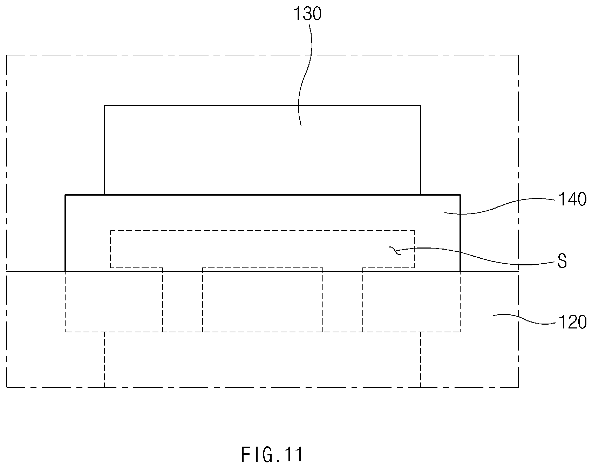

FIG. 9 is a perspective view schematically illustrating a secondary battery according to the present disclosure, and FIG. 10 is a cross-sectional view schematically illustrating a portion of a cross-section taken along line A-A' of FIG. 1. FIG. 11 is a plan view schematically illustrating a portion of a secondary battery according to the present disclosure.

Referring to FIGS. 9 to 11, a secondary battery 100 according to the present disclosure may include an electrode assembly 110 including a negative electrode, a positive electrode, and a separator; an exterior material 120 accommodating the electrode assembly 110; an electrode lead 130 electrically connected to the electrode assembly 110 and protruding to the outside of the exterior material 120; and a lead film 140 bonded to a portion of the electrode lead 130 to insulate the electrode lead 130 from the exterior material 120. Here, a fluid flow path S through which gas generated during charging and discharging of the electrode assembly 110 flows may be formed between the electrode lead 130 and the lead film 140, and a foam member 150 having heat-induced foaming properties may be provided in this fluid flow path S.

In this case, the foam member 150 foams by receiving heat generated during charging and discharging of the electrode assembly between the electrode lead 130 and the lead film 140, thereby expanding the fluid flow path S through which gas moves inside the exterior material 120. Therefore, the gas inside the exterior material 120 moves through the expanded fluid flow path S and is discharged to the outside of the exterior material 120, thereby delaying or preventing the rupture of the exterior material 120 due to an increase in internal pressure.

The secondary battery 100 may have a form in which the electrode assembly 110 is accommodated inside the exterior material 120. For example, the secondary battery 100 according to the present disclosure may refer to a pouch-type secondary battery among various types of secondary batteries capable of being charged and discharged. This is merely one example, and the shape of the secondary battery 100 may vary.

The electrode assembly 110 may include a positive electrode, a negative electrode, and a separator. Here, the separator may be disposed between the positive electrode and the negative electrode to physically separate the positive electrode and the negative electrode. The electrode assembly 110 may be in a stacked form where a positive electrode, a negative electrode, and a separator are laminated, or in a jelly-roll form where a positive electrode, a negative electrode, and a separator are wound.

The electrode assembly 110 may be accommodated inside the exterior material 120. The exterior material 120 may be a pouch-type exterior material including an inner layer, a metal layer, and an outer layer. Here, the inner layer of the pouch-type exterior material may be bonded to each other by heat and pressure to seal the internal space A of the exterior material 120. That is, after the exterior material 120 accommodates the electrode assembly 110 therein, the inner layer may be sealed by heat and pressure. Meanwhile, Al, STS, or the like may be mainly used for the metal layer, and the outer layer may be made of an insulating material.

The inner layer capable of sealing the exterior material 120 through sealing may be made of one or more materials selected from the group consisting of polyethylene, polypropylene, polycarbonate, polyethylene terephthalate, polyvinyl chloride, acrylic polymers, polyacrylonitrile, polyimide, polyamide, cellulose, aramid, nylon, polyester, polyparaphenylene benzobisoxazole, polyarylate, Teflon, and glass fiber. In particular, polyolefin resins such as polypropylene (PP) or polyethylene (PE) may be mainly used.

The secondary battery 100 may include an electrode lead 130. The electrode lead 130 may be electrically connected to the electrode assembly 110 and may be disposed to protrude to the outside of the exterior material 120. The secondary battery 100 may provide electrical energy to the outside by the electrode lead 130 protruding to the outside of the exterior material 120. Therefore, the electrode lead 130 may be a conductor.

The lead film 140 may cover the electrode lead 130 to insulate the exterior material 120 and the electrode lead 130 from each other. Specifically, the lead film 140 may be disposed on both surfaces of the electrode lead 130 to cover the electrode lead 130. The lead films 140 are configured in a pair, each of which may be disposed on both surfaces of the electrode lead 130.

This lead film 140 may be made of an insulating material. In particular, the lead film 140 may be made of a semi-permeable material that does not allow the electrolyte of the secondary battery to pass through but allows gas generated inside the secondary battery to pass through. For example, the lead film 140 may be a semi-permeable membrane made of a resin-based material such as PP, PET, or PE.

Meanwhile, the secondary battery 100 may generate gas as it is repeatedly charged and discharged, and thus the pressure inside the exterior material 120 may increase. If the pressure inside the exterior material 120 increases excessively, the rupture of the exterior material 120 may occur, thereby causing the secondary battery 100 to lose its function.

Specifically, an electrolyte may be accommodated together with the electrode assembly 110 inside the exterior material 120 of the secondary battery 100. At this time, residual moisture of the electrolyte or moisture infiltrated from the outside may react with the lithium salt inside the exterior material 120 of the secondary battery 100 to generate HF, and gases such as carbon dioxide, carbon monoxide, ethylene, and methane may be generated due to decomposition of the electrolyte.

Additionally, depending on the material of the positive electrode included in the electrode assembly 110 of the secondary battery 100, hydrogen and HF may be additionally generated, which may cause overheating due to overcharge and internal short circuit during the charging and discharging process. Accordingly, a large amount of gas may be generated inside the exterior material 120. The pressure inside the exterior material may increase due to such gas, and the increased pressure may cause a swelling phenomenon in which the exterior material 120 swells or a rupture in which a portion of the exterior material 120 bursts.

The secondary battery 100 according to the present disclosure may include a configuration capable of discharging gas inside the exterior material 120 to the outside of the exterior material 120 to prevent rupture of the exterior material 120. Referring to FIGS. 10 and 11, a fluid flow path S may be formed between the electrode lead 130 and the lead film 140 in the secondary battery 100 according to the present disclosure.

This fluid flow path S may be formed before gas is generated inside the secondary battery 100 due to repeated charging and discharging. For example, the fluid flow path S may be a portion where the electrode lead 130 and the lead film 140 are not bonded to each other. Specifically, when the lead film 140 is bonded to the electrode lead 130, it may be bonded to only a portion of the electrode lead 130. That is, the area where the lead film 140 and the electrode lead 130 are not bonded may become a fluid flow path S through which gas may flow.

Additionally, the fluid flow path S may be formed by foaming the foam member 150. Specifically, the foam member 150 provided between the electrode lead 130 and the lead film 140 may foam by heat applied during the sealing of the exterior material 120. In this case, the coupling between one surface of the electrode lead 130 and the lead film 140 is released to form an empty space, and this empty space may become the fluid flow path S.

The fluid flow path S may be provided so that one end thereof communicates with the internal space A of the exterior material 120. Therefore, when gas is generated inside the exterior material 120 of the secondary battery 100, the gas may move through the fluid flow path S. The other end of the fluid flow path S is not exposed to the external space of the exterior material 120, and the gas that has moved to the other end of the fluid flow path S may pass through the lead film 140 and be discharged to the outside of the exterior material 120.

That is, the gas may pass through the lead film 140. Specifically, the lead film 140 may be formed so that only gas may pass through the lead film 140, and liquid and solid may not move through the lead film 140. At this time, gas may pass through the lead film 140 by diffusion by moving at the molecular level.

Therefore, the secondary battery 100 according to the present disclosure may include a fluid flow path S capable of discharging internal gas between the electrode lead 130 and the lead film 140 by the foam member 150. In this case, the internal gas of the exterior material 120 is discharged to the outside through the fluid flow path S and the lead film 140, thereby delaying or preventing the rupture of the exterior material 120 due to an increase in internal pressure.

Meanwhile, the foam member 150 may be disposed at various positions between the electrode lead 130 and the lead film 140. For example, the foam member 150 may be disposed on the fluid flow path S formed between the electrode lead 130 and the lead film 140. At this time, the foam members 150 may be disposed at equal intervals from one end of the fluid flow path S to the other end.

Additionally, the foam member 150 may be disposed parallel to one end of the lead film 140. Here, one end of the lead film 140 may be one end in contact with the internal space A of the exterior material 120. As such, when the foam member 150 is disposed on one end of the lead film 140, the fluid flow path S formed by the foaming of the foam member 150 may communicate with the internal space A of the exterior material 120. In this case, the gas pending in the internal space A of the exterior material 120 may easily flow into the fluid flow path S, thereby efficiently discharging the internal gas of the exterior material 120.

Meanwhile, the foam member 150 may have various shapes and structures. For example, the foam member 150 may be provided in at least a portion of the fluid flow path S and may have a sheet shape coupled to one surface of the electrode lead 130. In this case, an adhesive layer may be formed between the foam member 150 and the electrode lead 130. The sheet-shaped foam member 150 may have the same structure as the foam member 13' illustrated in FIG. 7 described above.

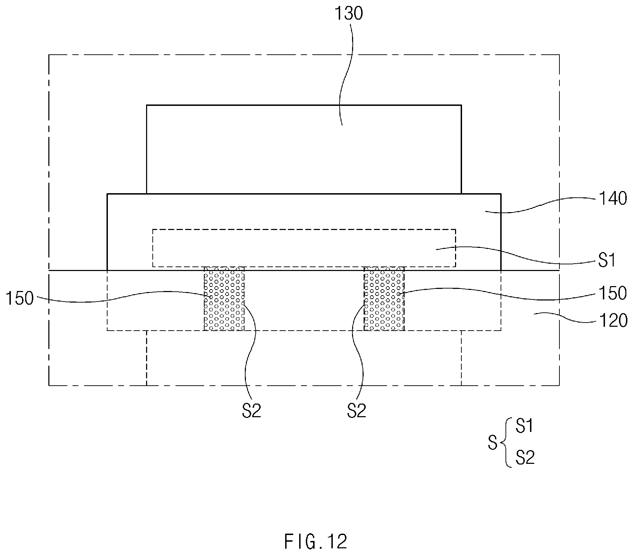

FIG. 12 is a plan view schematically illustrating a state in which a foam member is disposed only in a portion of the fluid flow path in a secondary battery according to the present disclosure.

Referring to FIG. 12, the foam member 150 may be disposed in a portion of the fluid flow path S adjacent to the internal space A of the exterior material 120. In this case, the inlet part where the internal gas of the exterior material 120 flows into the fluid flow path S expands during foaming of the foam member 150, thereby allowing the internal gas to effectively flow into the fluid flow path S.

Specifically, the fluid flow path S may include a first fluid flow path S1 adjacent to the internal space A of the exterior material 120 and extending along the length direction of the electrode lead 130, and a second fluid flow path S2 connected to the first fluid flow path S1 and extending along the width direction of the electrode lead 130. Here, the foam member 150 may be provided in the first fluid flow path S1.

The first fluid flow path S1 and the second fluid flow path S2 may be formed in various ways. For example, the fluid flow path S may have a roughly "T" or " 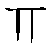 " shape. Among the "T" or " 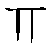 "-shaped fluid flow path S, the relatively narrow leg portion S1 may become the first fluid flow path S1, and the upper plate portion S2 of the fluid flow path S may become the second fluid flow path S2.

Meanwhile, the foam member 150 may have a spherical shape. Specifically, the foam member 150 may include a spherical shell made of a polymer material and expanding upon heating; and a foam material enclosed within the shell and foaming upon heating. This structure of the foam member 150 may be the same as the structure of the foam member 13 illustrated in FIG. 4.

The shell is a material that expands by receiving heat, and various types of polymer materials may be used for this material. Additionally, the foam material is a material that foams by receiving heat, and a foaming agent that foams at a temperature of 150°C or higher may be used for this material.

Meanwhile, the foam member 150 having a spherical shape may be coupled to the electrode lead 130 in various ways. For example, the foam member 150 may be attached to the electrode lead 130 by an adhesive, and an adhesive layer formed by curing the adhesive may be formed between the foam member 150 and the electrode lead 130.

Additionally, the foam member 150 may be coated on one surface of the electrode lead 130. For example, the foam member 150 may be coated on the electrode lead 130 using a thermosetting material such as a resin. In this case, the cured resin may form a coating layer. The structure in which the foam member 150 is coated on the electrode lead 130 by the coating layer may be the same as the structure in which the foam member 13 illustrated in FIG. 6 is coated on the electrode lead 11 by the coating layer 14.

Meanwhile, the secondary battery 100 may further include a pad-shaped member whose one surface is bonded to the electrode lead 130. The above-described fluid flow path S may be provided on the upper side of this pad-shaped member, and the foam member 150 that foams due to heat may be provided in at least a portion of the fluid flow path S.

The above structure in which the fluid flow path S is provided on the upper side of the pad-shaped member and the foam member 150 is provided in the fluid flow path S may be the same as the structure in which the fluid flow path S is provided on the upper side of the pad-shaped member 15 illustrated in FIG. 5 and the foam member 13 is provided in the fluid flow path S.

When the foam member 150 foams, the fluid flow path S formed between the pad-shaped member and the lead film 140 expands, and the gas pending in the internal space A of the exterior material 120 may be discharged to the outside of the exterior material 120 through the expanded fluid flow path S.

Meanwhile, when the pad-shaped member is viewed from above, the pad-shaped member may have a roughly "T" or " 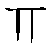 " shape. However, this is merely one example, and the pad-shaped member may have various shapes.

Additionally, the fluid flow path S formed on the upper side of the pad-shaped member may have the same shape as the geometry of the pad-shaped member. For example, when the pad-shaped member has a "T" or " 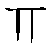 " shape, the fluid flow path S may also have a "T" or " 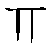 " shape.

Additionally, one end of the pad-shaped member may be in contact with one end of the lead film 140. In this case, at least a portion of the pad-shaped member may be in contact with the internal space A of the exterior material 120. In this case, the gas pending in the internal space A of the exterior material 120 may easily flow into the fluid flow path S formed on the upper side of the pad-shaped member, thereby efficiently discharging the internal gas of the exterior material 120.

As described above, the secondary battery 100 according to the present disclosure includes a fluid flow path S formed by heat transferred in the process of sealing the exterior material 120, thereby easily discharging gas generated by the charging and discharging of the secondary battery 100 to the outside. In this case, the stability of the secondary battery 100 is improved, and there is an advantageous effect of maintaining the performance of the secondary battery 100 for a longer period of time.

### Method for manufacturing secondary battery

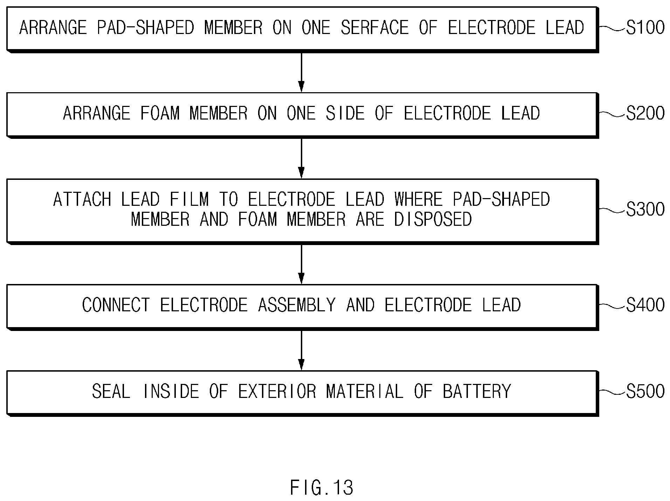

FIG. 13 is a flowchart of a method for manufacturing a secondary battery according to the present disclosure.

Referring to FIG. 13, the method for manufacturing a secondary battery according to the present disclosure may include a foam member arrangement step S200 of arranging a foam member 150 having heat-induced foaming properties on one side of the electrode lead 130; a film attachment step S300 of attaching a lead film 140 made of an insulating material to at least a portion the electrode lead 130; a connection step S400 of electrically connecting the electrode lead 130 to an electrode assembly 110 that is disposed inside an exterior material 120 and includes a negative electrode, a positive electrode, and a separator; and a sealing step of S500 sealing the inside of the exterior material 120 by bonding the exterior material 120 and the lead film 140. In the film attachment step S300, the lead film 140 may be attached only to a portion of the electrode lead 130, and a fluid flow path S through which gas generated during charging and discharging of the electrode assembly 110 flows may be formed between the lead film 140 and the electrode lead 130.

The secondary battery 100 manufactured by the method for manufacturing a secondary battery described above includes a fluid flow path S through which the internal gas of the exterior material 120 moves between the electrode lead 130 and the lead film 140, and a thermally expandable foam member 150 may be provided in the fluid flow path S. In this case, the foam member 150 foams by receiving heat generated during charging and discharging of the electrode assembly between the electrode lead 130 and the lead film 140, thereby expanding the fluid flow path S through which the gas inside the exterior material 120 moves. Therefore, the internal gas of the exterior material 120 moves through the expanded fluid flow path S and is discharged to the outside of the exterior material 120, thereby delaying or preventing the rupture of the exterior material 120 due to an increase in internal pressure.

The foam member arrangement step S200 is a step of arranging a foam member 150 having heat-induced foaming properties on one side of the electrode lead 130, and may be a step of arranging the foam member 150 on the upper surface of the electrode lead 130. The foam member 150 disposed on the upper surface of the electrode lead 130 may be brought into close contact with the upper surface of the electrode lead 130 by the film attachment step S300.

The film attachment step S300 is a step of attaching the lead film 140 made of an insulating material to the electrode lead 130, and the lead film 140 may be attached to cover at least a portion of the electrode lead 130. The lead film 140 prevents the electrode lead 130 from directly contacting the exterior material 120, and may be an insulating tape having an adhesive surface. At this time, the adhesive surface of the lead film 140 may be bonded to the electrode lead 130.

The connection step S400 is a step of electrically connecting the electrode assembly 110 and the electrode lead 130, and the electrode assembly 110 and the electrode lead 130 may be coupled in various ways. For example, the electrode assembly 110 includes a plurality of positive electrode tabs and negative electrode tabs, and the positive electrode tabs and the negative electrode tabs may each be coupled to form a positive electrode tab bundle and a negative electrode tab bundle, respectively. The electrode lead 130 may be welded to the positive electrode tab bundle and the negative electrode tab bundle.

In this connection step S400, the electrode lead 130 provided with the foam member 150 and the lead film 140 may be coupled to the positive electrode tab or the negative electrode tab of the electrode assembly 110.

The sealing step S500 is a step of sealing the inside of the exterior material 120, and may be a step of applying heat and pressure to the exterior material 120 and the lead film 140 to couple the exterior material 120 and the lead film 140. In this case, the open area of the exterior material 120 where the electrode lead 130 protrudes is sealed by the lead film 140, thereby sealing the internal space A of the exterior material 120.

Meanwhile, during this sealing step S500, the heat applied to the lead film 140 and the exterior material 120 may be transferred to the foam member 150. In this case, at least a portion of the foam member 150 may thermally expand and/or foam.

Specifically, the foam member 150 provided between the electrode lead 130 and the lead film 140 foams by receiving heat, and the fluid flow path S may expand by pressure formed by foaming. Through this expanded fluid flow path S, the internal gas of the exterior material 120 may move smoothly.

Specifically, one end of the fluid flow path S is in contact with the internal space A of the exterior material 120, and thus the internal gas of the exterior material 120 may flow into one end of the fluid flow path S. The other end of the fluid flow path S is not exposed to the external space of the exterior material 120, but the lead film 140 is formed of a semi-permeable membrane that does not allow the electrolyte to pass through but allows gas to pass through, so that the gas flowing into the fluid flow path S may be discharged to the outside through the lead film 140.

Meanwhile, the foam member 150 may foam at various temperatures to form a fluid flow path S. For example, the foam member 150 may thermally expand and foam at a temperature of 150°C or higher.

In the foam member arrangement step S200, the foam member 150 may be attached to one surface of the electrode lead 130. The attachment of the foam member 150 and the electrode lead 130 may be performed in various ways. For example, the foam member arrangement step S300 may be a step of forming an adhesive layer on one surface of the electrode lead 130 and then arranging the foam member 150 on the corresponding adhesive layer.

Additionally, in the foam member arrangement step S200, the foam member 150 may be coated on one surface of the electrode lead 130. The coating of the foam member 150 may be performed in various ways. For example, the foam member 150 may be coated on the electrode lead 130 using a thermosetting material such as a resin. In this case, the cured resin may form a coating layer.

In the film attachment step S300, a lead film 140 is attached to one surface of the electrode lead 130 provided with the foam member 150, and thus the foam member 150 may be brought into close contact with the electrode lead 130. Specifically, the adhesive surface of the lead film 140, which is an insulating tape, is attached to the foam member 150 and the electrode lead 130, and the foam member 150 may be pressed against the electrode lead 130 by the lead film 140. In this case, the foam member 150 is in close contact with the electrode lead 130, and the position of the foam member 150 may be fixed on one surface of the electrode lead 130.

Additionally, in the film attachment step S300, the lead film 140 may be attached to the electrode lead 130 so that one end the lead film 140 is disposed parallel to one end of the foam member 150. Specifically, in the film attachment step S300, the foam member 150 may be disposed parallel to one end of the lead film 140. At this time, although not illustrated in FIGS. 9 to 12, the foam member 150 may have the same shape as the sheet-shaped foam member 13' illustrated in FIG. 7.

Here, one end of the lead film 140 may be one end in contact with the internal space A of the exterior material 120. In this way, when the foam member 150 is disposed on one end of the lead film 140, the fluid flow path S formed by the foaming of the foam member 150 may communicate with the internal space A of the exterior material 120. In this case, the gas pending in the internal space A of the exterior material 120 may easily flow into the fluid flow path S, thereby efficiently discharging the internal gas of the exterior material 120.

Meanwhile, the method for manufacturing a secondary battery according to the present disclosure may further include a pad arrangement step S100 of being performed prior to the foam member arrangement step S200 described above and arranging a pad-shaped member on one surface of the electrode lead 130.

Specifically, the method for manufacturing a secondary battery according to the present disclosure may include a pad arrangement step S100 of arranging a pad-shaped member on one surface of an electrode lead 130, a foam member arrangement step S200 of arranging a foam member 150 on the pad-shaped member, a film attachment step S300 of attaching a lead film 140 to the electrode lead 130 and the pad-shaped member, a connection step S400 of connecting the electrode assembly 110 and the electrode lead 130, and a sealing step S500 of sealing the internal space A of the exterior material 120.

The pad arrangement step S100 is a step of arranging a pad-shaped member on the upper surface of the electrode lead 130, and the arrangement of the pad-shaped member may be configured in various ways. For example, in the pad arrangement step S110, the pad-shaped member may be bonded to the upper surface of the electrode lead 130. At this time, the pad-shaped member may have various shapes. For example, when the pad-shaped member is viewed from above, the pad-shaped member may have a roughly "T" or " 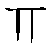 " shape.

At this time, at least a portion of the upper surface of the pad-shaped member may not be bonded to the lead film 140. In this case, the space between the lead film 140 and the portion of the upper surface of the pad-shaped member that is not bonded to the lead film 140 may be used as a fluid flow path S through which the internal gas of the exterior material 120 may move. This fluid flow path S may be configured in various shapes. For example, when the fluid flow path S is viewed from above, the fluid flow path S may have a roughly "T" or " 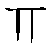 " shape.

Meanwhile, in the foam member arrangement step S200, the foam member 150 may be disposed on one surface of the pad-shaped member. Specifically, the foam member 150 may be disposed on a portion of the upper surface of the pad-shaped member provided on the upper side of the electrode lead 130 that corresponds to the fluid flow path S. This foam member 150 may thermally expand and foam by receiving heat in the sealing step S500, thereby expanding the fluid flow path S.

Meanwhile, in the film attachment step S300, the foam member 150 may be brought into close contact with the pad-shaped member by the lead film 140. Specifically, the foam member 150 is disposed on the upper surface of the pad-shaped member, so that the foam member 150 may be brought into close contact with the upper surface of the pad-shaped member by the lead film 140, which is an insulating tape. The lead film 140, which is an insulating tape, may be attached to the pad-shaped member and the electrode lead 130 while the foam member 150 is pressed. In this case, the foam member 150 is in close contact with the pad-shaped member, and the position of the foam member 150 may be fixed on the upper surface of the pad-shaped member.

Additionally, in the connection step S400, the electrode lead 130 including the pad-shaped member, the foam member 150, and the lead film 140 may be coupled to the positive electrode tab or the negative electrode tab of the electrode assembly 110. Specifically, the portion of the electrode lead 130 where the pad-shaped member, the foam member 150, and the lead film 140 are not disposed may be welded to the positive electrode tab or the negative electrode tab of the electrode assembly 110.

The present disclosure has been hereinabove described with regard to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

**[List of Reference Numerals]**

| | | | |
|---|---|---|---|
| 10: | Electrode lead assembly | 11: | Electrode lead |
| 12: | Lead film | 13: | Foam member |
| 13a: | Shell | 13b: | Foam material |
| 14: | Coating layer | 15: | Pad-shaped member |
| S: | Fluid flow path | S1: | First fluid flow path |
| S2: | Second fluid flow path | | |

## Claims

1. An electrode lead assembly comprising:
an electrode lead;
a lead film made of an insulating material and bonded to a portion of the electrode lead; and
a foam member having heat-induced foaming properties,
wherein a fluid flow path through which a fluid flows is formed between the electrode lead and the lead film, and the foam member is provided in the fluid flow path.

2. The electrode lead assembly according to claim 1,
wherein the fluid flow path comprises:
a first fluid flow path extending along the length direction of the electrode lead from one end of the lead film; and
a second fluid flow path connected to the first fluid flow path and extending along the width direction of the electrode lead.

3. The electrode lead assembly according to claim 2,
wherein the foam member is provided in the first fluid flow path.

4. The electrode lead assembly according to claim 1,
wherein the foam member foams at a temperature of 150°C or higher.

5. The electrode lead assembly according to claim 1,
wherein the foam member has a sheet shape and is attached to one surface of the electrode lead.

6. The electrode lead assembly according to claim 1,
wherein the foam member comprises:
a shell made of a polymer material and expanding upon heating; and
a foam material enclosed within the shell and foaming upon heating.

7. The electrode lead assembly according to claim 1, further comprising:
a coating layer that coats the foam member on the electrode lead.

8. The electrode lead assembly according to claim 1, further comprising:
a pad-shaped member whose one surface is bonded to the electrode lead.

9. The electrode lead assembly according to claim 8,
wherein the fluid flow path is formed between the pad-shaped member and the lead film.

10. A method for manufacturing an electrode lead assembly, comprising:
a foam member arrangement step of arranging a foam member having heat-induced foaming properties on one side of an electrode lead; and
a film attachment step of attaching a lead film made of an insulating material to the electrode lead where the foam member is disposed,
wherein in the film attachment step, the lead film is attached to only a portion of the electrode lead, and a fluid flow path through which a fluid flows is formed between the lead film and the electrode lead.

11. The method for manufacturing an electrode lead assembly according to claim 10,
wherein in the film attachment step, the foam member is brought into close contact with the electrode lead by the lead film.

12. The method for manufacturing an electrode lead assembly according to claim 10,
wherein in the film attachment step, the lead film is attached to the electrode lead so that one end of the lead film is disposed parallel to one end of the foam member.

13. The method for manufacturing an electrode lead assembly according to claim 10,
wherein in the foam member arrangement step, the foam member is attached to one surface of the electrode lead.

14. The method for manufacturing an electrode lead assembly according to claim 10,
wherein in the foam member arrangement step, the foam member is coated on one surface of the electrode lead.

15. The method for manufacturing an electrode lead assembly according to claim 10, further comprising:
a pad arrangement step of being performed prior to the foam member arrangement step and arranging a pad-shaped member on one surface of the electrode lead.

16. The method for manufacturing an electrode lead assembly according to claim 15,
wherein in the foam member arrangement step, the foam member is disposed on one surface of the pad-shaped member.

17. The method for manufacturing an electrode lead assembly according to claim 16,
wherein in the film attachment step, the foam member is brought into close contact with the pad-shaped member by the lead film.

18. A secondary battery comprising:
an electrode assembly comprising a negative electrode, a positive electrode, and a separator;
an exterior material accommodating the electrode assembly;
an electrode lead electrically connected to the electrode assembly and protruding to the outside of the exterior material; and
a lead film bonded to a portion of the electrode lead to insulate the electrode lead from the exterior material,
wherein a fluid flow path through which gas generated during charging and discharging of the electrode assembly flows is formed between the electrode lead and the lead film, and
wherein a foam member having heat-induced foaming properties is provided in the fluid flow path.

19. The secondary battery according to claim 18,
wherein the foam member is disposed adjacent to the internal space of the exterior material accommodating the electrode assembly in the fluid flow path.

20. The secondary battery according to claim 19,
wherein the fluid flow path comprises:
a first fluid flow path adjacent to the internal space of the exterior material and extending along the length direction of the electrode lead; and
a second fluid flow path connected to the first fluid flow path and extending along the width direction of the electrode lead.

21. The secondary battery according to claim 20,
wherein the foam member is provided in the first fluid flow path.

22. A method for manufacturing a secondary battery, comprising:
a foam member arrangement step of arranging a foam member having heat-induced foaming properties on one side of an electrode lead;
a film attachment step of attaching a lead film made of an insulating material to the electrode lead where the foam member is disposed;
a connection step of electrically connecting the electrode lead to an electrode assembly that is disposed inside an exterior material and comprises a negative electrode, a positive electrode, and a separator; and
a sealing step of sealing the inside of the exterior material by bonding the exterior material and the lead film,
wherein in the film attachment step, the lead film is attached to only a portion of the electrode lead, and a fluid flow path through which gas generated during charging and discharging of the electrode assembly flows is formed between the lead film and the electrode lead.

23. The method for manufacturing a secondary battery according to claim 22,
wherein the sealing step comprises a step of applying heat and pressure to the exterior material and the lead film, and at least a portion of the foam member foams due to the heat applied in the sealing step.
